# DEMANDE DE BREVET EUROPEEN

(11) **EP 2 095 993 A1**
(43) Date de publication de la demande: **02.09.2009**
(21) Numéro de dépôt: 09290119.8
(22) Date de dépôt: 18.02.2009
(51) Int. Cl.: B60N 2/48, B60N 2/58

(54) **Appui-tête comprenant un volet de fermeture actionnable en rotation**

(30) Priorité: 26.02.2008 FR 0801055
(71) Demandeur: CENTRE D'ETUDE ET RECHERCHE POUR L'AUTOMOBILE ( CERA), 51100 Reims (FR)
(72) Inventeur: Bonfils, Xavier, 51100 Reims (FR)
(74) Mandataire: Sayettat, Julien Christian

(57) **Abrégé**

L'invention concerne un appui-tête (1) de siège de véhicule automobile, comprenant une armature (2), un bloc (3) de rembourrage, une coiffe (4) de garnissage dudit bloc, ladite coiffe étant pourvue d'une ouverture (5) d'introduction dudit bloc, ledit appui-tête comprenant en outre un dispositif de fermeture (6) de ladite ouverture, ledit dispositif de fermeture comprenant un volet (7) monté en rotation solidairement à ladite armature selon un premier axe (8), ledit volet étant actionnable en rotation entre une position ouverte et une position fermée, un moyen d'association (9) d'une zone périphérique (10) de ladite ouverture sur une zone (11) dudit volet disposée à distance dudit premier axe, ledit dispositif étant agencé de sorte à permettre, lorsque lesdites zones sont associées entre elles, une tension de ladite coiffe lors du passage de la position ouverte à la position fermée.

## Description

L'invention concerne un appui-tête de siège de véhicule automobile et un procédé de garnissage d'un tel appui-tête.

Il est connu de réaliser un appui-tête de siège de véhicule automobile, comprenant :
- une armature, notamment métallique,
- un bloc de rembourrage, par exemple à base de mousse flexible,
- une coiffe de garnissage dudit bloc, par exemple à base de textile, ladite coiffe étant pourvue d'une ouverture d'introduction dudit bloc.

Après garnissage du bloc par la coiffe, l'étape de fermeture de l'ouverture s'avère être une opération pénible, du fait que l'opérateur de fabrication doit tirer sur la coiffe pour y parvenir.

Usuellement, la périphérie de l'ouverture est associée à des profilés que l'opérateur doit associer entre eux. Pour ce faire, il lui est nécessaire d'exercer une tension sur la coiffe, de sorte qu'elle soit plaquée sur le bloc de rembourrage, ce qui requiert un effort important pouvant conduire à des maladies professionnelles telles que des tendinites, sans compter les surplus de temps et de coûts associés à une telle opération.

L'invention a pour but de pallier ces inconvénients en proposant un appui-tête agencé de sorte à limiter les efforts déployés par l'opérateur pour fermer la coiffe.

A cet effet, et selon un premier aspect, l'invention propose un appui-tête de siège de véhicule automobile, comprenant :
- une armature,
- un bloc de rembourrage,
- une coiffe de garnissage dudit bloc, ladite coiffe étant pourvue d'une ouverture d'introduction dudit bloc,
ledit appui-tête comprenant en outre un dispositif de fermeture de ladite ouverture, ledit dispositif de fermeture comprenant :
- un volet monté en rotation solidairement à ladite armature selon un premier axe, ledit volet étant actionnable en rotation entre une position ouverte et une position fermée,
- un moyen d'association d'une zone périphérique de ladite ouverture sur une zone dudit volet disposée à distance dudit premier axe,
ledit dispositif étant agencé de sorte à permettre, lorsque lesdites zones sont associées entre elles, une tension de ladite coiffe lors du passage de la position ouverte à la position fermée.

L'opérateur réalise ainsi la tension de la coiffe permettant sa fermeture par effet de bras de levier, ce qui réduit considérablement la pénibilité de l'opération.

Dans la description qui suit, les termes de positionnement dans l'espace (supérieur, inférieur, longitudinal, transversal, avant,...) sont pris en référence à l'appui-tête disposé dans le véhicule.

Selon un deuxième aspect, l'invention propose un procédé de garnissage d'un tel appui-tête de véhicule automobile, ledit procédé comprenant les étapes suivantes :
- associer la coiffe au volet lorsque ledit volet est en position ouverte,
- actionner ledit volet vers la position fermée de sorte à mettre en tension ladite coiffe et à fermer l'ouverture.

D'autres particularités et avantages de l'invention apparaîtront dans la description qui suit, faite en référence aux figures jointes dans lesquelles :
- la figure 1 est une représentation schématique en coupe longitudinale d'un appui-tête selon une première réalisation, une zone périphérique de l'ouverture étant associée à une zone dudit volet, le volet étant en position ouverte (a) et fermée (b),
- la figure 2 est une représentation schématique en coupe longitudinale d'un appui-tête selon une deuxième réalisation, une zone périphérique de l'ouverture étant associée à une zone dudit volet, le volet étant en position ouverte (a) et fermée (b),
- la figure 3 est une représentation schématique en perspective éclatée de l'armature, du volet et de l'insert d'appui de l'appui-tête de la figure 2.

En référence aux figures, on décrit un appui-tête 1 de siège de véhicule automobile, comprenant :
- une armature 2, notamment métallique,
- un bloc 3 de rembourrage, par exemple à base de mousse flexible,
- une coiffe 4 de garnissage dudit bloc, par exemple à base de textile ou de cuir, ladite coiffe étant pourvue d'une ouverture 5 d'introduction dudit bloc,
ledit appui-tête comprenant en outre un dispositif 6 de fermeture de ladite ouverture, ledit dispositif de fermeture comprenant :
- un volet 7 monté en rotation solidairement à ladite armature selon un premier axe 8, notamment transversal, ledit volet étant actionnable en rotation entre une position ouverte et une position fermée,
- un moyen d'association 9 d'une zone périphérique 10 de ladite ouverture sur une zone 11 dudit volet disposée à distance dudit premier axe,
ledit dispositif étant agencé de sorte à permettre, lorsque lesdites zones sont associées entre elles, une tension de ladite coiffe lors du passage de la position ouverte à la position fermée.

La tension étant réalisée par effet de bras de levier, du fait de l'écart entre le moyen d'association 9 et le premier axe 8, il en résulte une moindre pénibilité pour l'opérateur de fabrication de l'appui-tête 1 et un gain de temps.

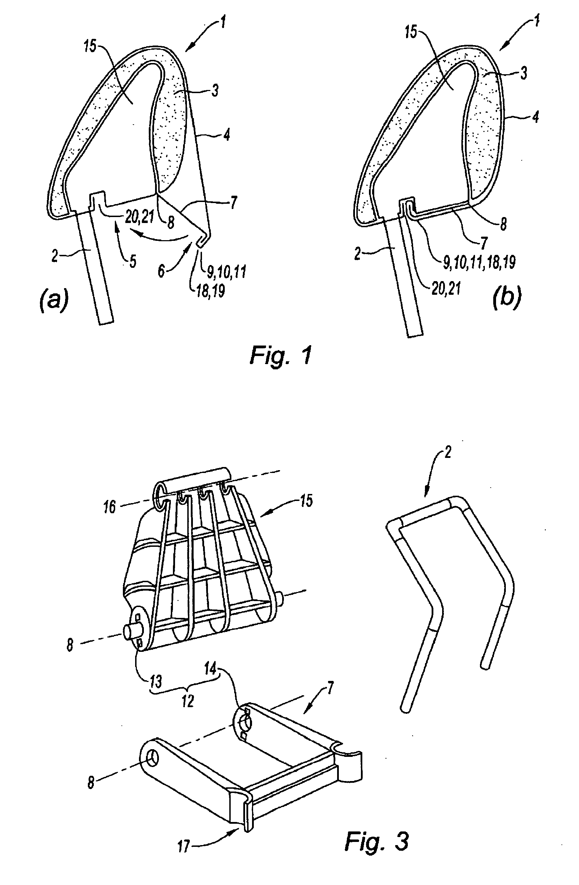

Comme représenté en figure 3, l'appui-tête 1 comprend un moyen de verrouillage 12 du volet 7 en position fermée. Le moyen de verrouillage 12 est ici sous la forme d'ergots 13 prévus sur l'insert et coopérant en emboîtement avec des logements 14 réciproques prévus sur le volet 7.

Le moyen de verrouillage 12 est activé par mise du volet 7 en position fermée.

Selon les réalisations représentées, le volet 7 est monté en rotation sur un insert 15 d'appui, destiné à réaliser un appui de la tête d'un passager au travers du bloc 3 et de la coiffe 4, solidaire de l'armature 2, ledit insert étant logé dans le bloc 3.

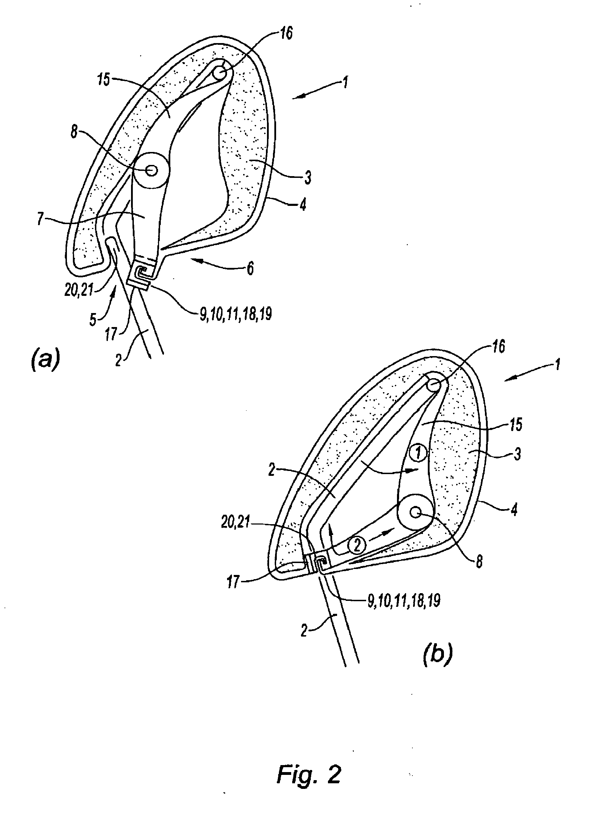

Selon la réalisation des figures 2 et 3, l'insert 15 d'appui est monté en rotation selon un deuxième axe 16, notamment transversal, à l'armature 2.

Selon la réalisation de la figure 1, l'insert 15 d'appui est en forme de cloche, le premier axe 8 étant disposé en partie inférieure dudit insert.

Selon la réalisation des figures 2 et 3, l'insert 15 d'appui forme une plaque dont le bord supérieur est articulé à l'armature 2 selon le deuxième axe 16, son bord inférieur étant articulé au volet 7 selon le premier axe 8, de sorte que ledit premier axe soit sensiblement dans le plan médian de ladite armature en position ouverte et à distance du plan médian de ladite armature en position fermée.

Par le terme de « plaque » employé pour caractériser l'insert 15, on entend une géométrie permettant d'offrir une surface d'appui d'enveloppe sensiblement plane, permettant un appui de la tête d'un passager au travers du bloc 3 et de la coiffe 4. L'insert 15 peut donc présenter diverses configurations : plaque opaque, plaque ajourée, réseau de nervures, etc....

Le volet 7 en position fermée prend ici appui contre l'armature 2, sur une zone d'appui 17, de sorte à reprendre les efforts sur ladite armature.

Le volet 7 se présente ici sous une forme générale de U où le premier axe 8 passe par les extrémités libres de ses branches.

Selon une variante de réalisation non représentée, l'insert 15 d'appui et le volet 7 sont à base de matière plastique moulée d'une pièce, l'articulation selon le premier axe 8 étant sous forme d'une zone rectiligne amincie issue de moulage formant charnière.

Comme visualisé en figure 3, l'armature 2 est formée d'un tube sensiblement en forme de U renversé, ici recourbé vers l'avant, le deuxième axe 16 étant disposé sensiblement selon la traverse supérieure du U.

Selon les réalisations représentées, l'ouverture 5 est en forme générale de fente dont une première lèvre 18 est associée à un premier profilé 19 coopérant en emboîtement avec le volet 7 de sorte à former moyen d'association 9, la deuxième lèvre 20 étant associée à un deuxième profilé 21, ledit premier profilé étant emboîté avec ledit deuxième profilé.

Comme visualisé en figure 2(a), le deuxième profilé 21 est disposé de sorte à pouvoir recevoir le premier profilé 19 en emboîtement en fin de rabattement du volet 7 en position fermée. Ainsi, l'opérateur n'a pas à réaliser une étape spécifique de fermeture, pénible et coûteuse.

On décrit à présent un procédé de garnissage d'un appui-tête 1 de véhicule automobile, ledit procédé comprenant les étapes suivantes :
- associer la coiffe 4 au volet 7 lorsque ledit volet est en position ouverte,
- actionner ledit volet vers la position fermée de sorte à mettre en tension ladite coiffe et à fermer l'ouverture 5.

Lorsque l'appui-tête 1 comprend un moyen de verrouillage 12, l'étape d'actionnement du volet 7 peut comprendre un verrouillage final dudit volet en position fermée.

## Revendications

1. Appui-tête (1) de siège de véhicule automobile, comprenant :
• une armature (2),
• un bloc (3) de rembourrage,
• une coiffe (4) de garnissage dudit bloc, ladite coiffe étant pourvue d'une ouverture (5) d'introduction dudit bloc,
ledit appui-tête étant **caractérisé en ce qu'**il comprend en outre un dispositif de fermeture (6) de ladite ouverture, ledit dispositif de fermeture comprenant :
• un volet (7) monté en rotation solidairement à ladite armature selon un premier axe (8), ledit volet étant actionnable en rotation entre une position ouverte et une position fermée,
• un moyen d'association (9) d'une zone périphérique (10) de ladite ouverture sur une zone (11) dudit volet disposée à distance dudit premier axe,
ledit dispositif étant agencé de sorte à permettre, lorsque lesdites zones sont associées entre elles, une tension de ladite coiffe lors du passage de la position ouverte à la position fermée.

2. Appui-tête selon la revendication 1, **caractérisé en ce qu'**il comprend en outre un moyen de verrouillage (12) du volet (7) en position fermée.

3. Appui-tête selon la revendication 1 ou 2, **caractérisé en ce que** le volet (7) est monté en rotation sur un insert (15) d'appui solidaire de l'armature (2), ledit insert étant logé dans le bloc (3).

4. Appui-tête selon la revendication 3, **caractérisé en ce que** l'insert (15) d'appui est monté en rotation selon un deuxième axe (16) à l'armature (2).

5. Appui-tête selon l'une quelconque des revendications 3 ou 4, **caractérisé en ce que** l'insert (15) d'appui est en forme de cloche, le premier axe (8) étant disposé en partie inférieure dudit insert.

6. Appui-tête selon la revendication 4, **caractérisé en ce que** l'insert (15) d'appui forme une plaque dont le bord supérieur est articulé à l'armature (2) selon le deuxième axe (16), son bord inférieur étant articulé au volet (7) selon le premier axe (8), de sorte que ledit premier axe soit sensiblement dans le plan médian de ladite armature en position ouverte et à distance du plan médian de ladite armature en position fermée.

7. Appui-tête selon la revendication 6, **caractérisé en ce que** le volet (7) en position fermée prend appui contre l'armature (2), de sorte à reprendre les efforts sur ladite armature.

8. Appui-tête selon l'une quelconque des revendications 6 ou 7, **caractérisé en ce que** l'insert (15) d'appui et le volet (7) sont à base de matière plastique moulée d'une pièce, l'articulation selon le premier axe (8) étant sous forme d'une zone rectiligne amincie issue de moulage formant charnière.

9. Appui-tête selon l'une quelconque des revendications 4 à 8, **caractérisé en ce que** l'armature (2) est formée d'un tube sensiblement en forme de U renversé, le deuxième axe (16) étant disposé sensiblement selon la traverse supérieure du U.

10. Appui-tête selon l'une quelconque des revendications 1 à 9, **caractérisé en ce que** l'ouverture (5) est en forme générale de fente dont une première lèvre (18) est associée à un premier profilé (19) coopérant en emboîtement avec le volet (7) de sorte à former moyen d'association (9), la deuxième lèvre (20) étant associée à un deuxième profilé (21), ledit premier profilé étant emboîté avec ledit deuxième profilé.

11. Procédé de garnissage d'un appui-tête de véhicule automobile selon l'une quelconque des revendications 1 à 10, ledit procédé étant **caractérisé en ce qu'**il comprend les étapes suivantes :
• associer la coiffe (4) au volet (7) lorsque ledit volet est en position ouverte,
• actionner ledit volet vers la position fermée de sorte à mettre en tension ladite coiffe et à fermer l'ouverture (5).

12. Procédé selon la revendication 11, quand elle dépend de la revendication 2, **caractérisé en ce que** l'étape d'actionnement du volet (7) comprend un verrouillage final dudit volet en position fermée.
